# FASCICULE DE BREVET EUROPEEN

(11) **EP 2 805 650 B1**
(45) Date de publication et mention de la délivrance du brevet: **16.03.2016**
(21) Numéro de dépôt: 14167259.2
(22) Date de dépôt: 06.05.2014
(51) Int. Cl.: A47J 27/21

(54) **Bouilloire comportant un boîtier étanche**
Kochtopf, der ein dichtes Gehäuse umfasst
Boiler comprising a sealed housing

(30) Priorité: 21.05.2013 FR 1354547
(43) Date de publication de la demande: 26.11.2014
(73) Titulaire: SEB S.A., 69130 Ecully (FR)
(72) Inventeur: Cour, Angeline, 21000 Dijon (FR); Russier, Fabien, 21000 Dijon (FR); Payen, Christophe, 21380 Asnières Les Dijon (FR)
(74) Mandataire: Bourrières, Patrice

(56) Documents cités:
- WO-A1-2009/109762
- CN-U- 202 891 596
- GB-A- 2 330 064

## Description

La présente invention concerne une bouilloire et vise à améliorer l'étanchéité de la bouilloire afin de pouvoir la laver complètement après chaque utilisation sans nuire au bon fonctionnement de l'appareil lors d'un usage fréquent.

Diverses conceptions de bouilloires étanches sont connues de l'homme du métier, parmi lesquelles notamment celle décrite dans la demande internationale de brevet publiée sous le numéro WO 2009/109762 A1. La bouilloire selon WO 2009/109762 A1 comprend un corps, une plaque chauffante, un boîtier inférieur dans lequel est logé un dispositif de commande, des moyens d'étanchéité étant mis en oeuvre entre le corps, la plaque chauffante et le boîtier inférieur. Un inconvénient majeur de la bouilloire décrite dans WO 2009/109762 A1, ainsi que pour les bouilloires étanches de l'art antérieur, de manière générale, est qu'en cas de défectuosité des moyens d'étanchéité, notamment lors d'un usage fréquent, l'eau pénètre dans le boîtier inférieur, ce qui endommage le dispositif de commande et peut le détruire complètement en générant un court-circuit électrique. De plus, l'utilisateur doit alors remplacer complètement le dispositif de commande voire la bouilloire entière, alors que le remplacement des moyens d'étanchéité aurait pu suffire.

Une autre bouilloire est décrite dans le document CN202891596U.

La présente invention vise à pallier cet inconvénient majeur des bouilloires de l'art antérieur. A cet effet, l'invention concerne une bouilloire qui de manière connue, comprend un corps en plastique, une plaque chauffante et un boîtier inférieur dans lequel est logé un dispositif de commande interne de la plaque chauffante. Le boîtier inférieur comprend une paroi interne périphérique, de préférence de forme circulaire, qui s'étend vers le haut. Le corps comporte une partie inférieure. La plaque chauffante comprend une face inférieure et un rebord périphérique. Un joint d'étanchéité externe est agencé entre le rebord périphérique et la partie inférieure. Selon l'invention, un joint d'étanchéité interne est agencé entre la paroi interne et la face inférieure de la plaque chauffante pour empêcher toute pénétration d'eau dans le boitier, notamment de l'eau issue d'une fuite due à un défaut d'étanchéité du joint d'étanchéité externe.

Selon une conception de la bouilloire objet de l'invention, la partie inférieure du corps comprend une paroi externe périphérique configurée pour réceptionner au moins une partie supérieure de la paroi interne tout en conservant un espacement entre ces deux parois interne et externe, ledit espacement communiquant vers l'extérieur de la bouilloire.

Selon une conception de la bouilloire objet de l'invention, la plaque chauffante comprend un rebord périphérique muni d'un bord externe recourbé vers le bas et configuré pour être positionné entre la paroi interne et la paroi externe en maintenant un espacement, d'une part, entre la paroi interne et le bord externe et, d'autre part, entre le bord externe et la paroi externe. Le joint d'étanchéité interne est agencé entre la paroi interne et le bord externe et le joint d'étanchéité externe est agencé entre le bord externe et la paroi externe.

Ainsi, lorsque le corps de la bouilloire est rempli d'eau, le joint d'étanchéité externe évite que l'eau ne s'échappe entre la paroi externe du corps et le bord externe du rebord de la plaque chauffante. De même, le joint d'étanchéité interne permet d'éviter que l'eau ne pénètre entre la paroi interne du boîtier inférieur et le bord externe du rebord de la plaque chauffante, durant le nettoyage de la bouilloire avec de l'eau. En outre, lors d'un nettoyage fréquent, et de préférence à chaque utilisation, le joint d'étanchéité externe est plus sollicité que le joint d'étanchéité interne lors de l'essuyage de l'intérieur du corps de la bouilloire. Cela peut causer l'endommagement du joint d'étanchéité externe plus rapidement que le joint d'étanchéité interne. En cas de défectuosité du joint d'étanchéité externe, l'eau passe alors entre la paroi externe du corps et le bord externe du rebord de la plaque chauffante et s'évacue directement vers l'extérieur de la bouilloire. D'une part, cela évite le risque de pénétration d'eau dans le boîtier inférieur au cas où le joint d'étanchéité interne serait également défectueux pour éviter tout risque électrique; d'autre part cela permet de déceler une fuite éventuelle du joint d'étanchéité externe et de procéder à son remplacement.

Selon une conception de la bouilloire objet de l'invention, le rebord périphérique est muni également d'un bord interne recourbé vers le bas et configuré pour permettre le logement de la partie supérieure de la paroi interne entre le bord interne et le bord externe. En outre, le joint d'étanchéité interne est configuré pour assurer également une étanchéité entre le bord interne et la partie supérieure de la paroi interne. Cela renforce l'étanchéité entre la plaque chauffante et le boîtier inférieur, ainsi que le maintien de la plaque chauffante assemblée sur le boîtier inférieur. Cela permet également de maintenir en position le joint.

Dans un mode de réalisation, selon cette conception de la bouilloire, le joint d'étanchéité interne comprend, dans un plan de vue en coupe sectionnelle :
- une branche interne qui s'étend vers le bas et est configurée pour être montée serrée autour du bord interne,
- une branche externe qui s'étend vers le bas et présente une face interne configurée pour être montée serrée autour de la partie supérieure de la paroi interne et, une face externe configurée pour monter serré le bord externe autour de ladite face externe,
- une jonction entre la branche interne et la branche externe, une face inférieure de la jonction étant configurée pour prendre appui sur l'extrémité supérieure de la partie supérieure de la paroi interne et une face supérieure de la jonction étant configurée pour prendre appui sur le fond du rebord.

Dans une réalisation préférentielle du joint d'étanchéité interne, la face externe de la branche externe comprend au moins une lèvre. En outre, le bord externe du rebord comprend une face interne munie de stries. Cela renforce l'assemblage et l'étanchéité entre la plaque chauffante et le boîtier inférieur.

Selon une conception de la bouilloire objet de l'invention, le bord externe du rebord périphérique comprend à son extrémité inférieure un épaulement externe et la paroi externe comprend un épaulement interne. En outre, le joint d'étanchéité externe est positionné entre l'épaulement interne et l'épaulement externe. Cela permet de réaliser l'étanchéité entre le corps et la plaque chauffante en assurant un arrêt de la position du corps par rapport à la plaque chauffante.

Selon cette conception de la bouilloire, la paroi interne du boîtier inférieur comprend une partie inférieure, un épaulement externe périphérique étant agencé entre ladite partie inférieure et la partie supérieure de ladite paroi interne. En outre, l'épaulement interne de la paroi externe du corps et l'épaulement externe du bord externe sont configurés pour maintenir un espacement entre l'extrémité inférieure périphérique du corps et l'épaulement externe du boîtier inférieur lors de leur assemblage, ce qui permet l'évacuation de l'eau en cas de défectuosité du joint d'étanchéité externe.

Selon cette conception de la bouilloire, des moyens de fixation sont agencés entre l'extrémité inférieure de la paroi externe du corps et l'épaulement externe du boîtier inférieur. Cela permet de maintenir assemblé ensemble le corps, la plaque chauffante et le boîtier inférieur et d'assurer l'étanchéité.

Selon une réalisation de la bouilloire objet de l'invention, le corps comprend une poignée et un dispositif de commande externe est agencé sur la poignée. Ce dispositif de commande externe est raccordé par un câble au dispositif de commande interne disposé dans le boîtier inférieur. En outre, des moyens d'étanchéité sont agencés entre le câble et le boîtier inférieur. Cette conception facilite l'actionnement de la bouilloire, tout en empêchant une infiltration d'eau dans le boîtier inférieur du fait de la connexion étanche par câble avec le dispositif de commande interne disposé dans le boîtier inférieur.

Selon une mise en oeuvre de la bouilloire, les moyens d'étanchéité sont formés par un presse-étoupe agencé sur le boîtier inférieur

Selon une mise en oeuvre de la bouilloire, le dispositif de commande externe sur la poignée forme un module autonome étanche.

Selon une conception préférentielle, le dispositif de commande externe sur la poignée comprend :
- un support inférieur logé dans la poignée, le câble passant au travers du support inférieur ;
- une carte circuit imprimé comprenant un interrupteur Marche/Arrêt, la carte circuit imprimé étant positionnée sur le support inférieur ;
- un joint élastomère configuré pour recouvrir la carte circuit imprimé et l'interrupteur Marche/Arrêt, en épousant leur forme et en laissant apparaître un contour périphérique plat qui repose sur le support inférieur;
- une pièce de serrage permettant de serrer en sandwich le contour du joint élastomère entre le support inférieur et la pièce de serrage ;
- un organe d'étanchéité agencé sur le support inférieur et configuré pour permettre le passage étanche du câble, ledit câble étant raccordé à la carte circuit imprimé.

Selon une mise en oeuvre de la bouilloire, l'organe d'étanchéité est un presse étoupe.

Selon une mise en oeuvre de la bouilloire, la poignée comporte une première partie interne formant un évidement dans lequel est agencé le dispositif de commande externe. En outre, la poignée comporte une seconde partie d'habillage qui coiffe ledit dispositif de commande externe sur la poignée.

Selon cette réalisation de la bouilloire, le câble s'étend à l'intérieur de la poignée jusqu'au boîtier inférieur. Cela évite de prévoir un logement supplémentaire sur le corps de la bouilloire pour permettre le passage du câble jusqu'au boîtier inférieur.

Selon la bouilloire objet de l'invention, celle-ci comprend une base d'alimentation électrique déportée munie d'un connecteur mâle. En outre, le boîtier inférieur comprend un fond muni d'un connecteur femelle configuré pour recevoir le connecteur mâle, ledit connecteur femelle étant configuré pour assurer une étanchéité du boîtier inférieur.

Selon une conception préférentielle, le connecteur mâle et le connecteur femelle sont circulaires. Cela assure une rotation à 360° du corps sur la base pour faciliter sa manipulation et permettre le positionnement ou le retrait du corps de la bouilloire dans n'importe qu'elle position par rapport à la base.

La description suivante met en évidence un mode préférentiel de réalisation de la bouilloire selon l'invention. Cette description s'appuie sur des figures parmi lesquelles :
- la figure 1 est une vue en coupe de la bouilloire montrant notamment le corps, la plaque chauffante et le boîtier inférieur ;
- la figure 2 est une vue en coupe partielle de la figure 1 montrant l'assemblage étanche entre le corps, la plaque chauffante et le boîtier intérieur ;
- la figure 3 est une vue éclatée de la bouilloire montrant les éléments du dispositif de commande externe intégré dans la poignée ;
- la figure 4 est une vue partielle de la poignée de la bouilloire montrant l'assemblage des éléments du dispositif de commande externe illustrés en figure 3.

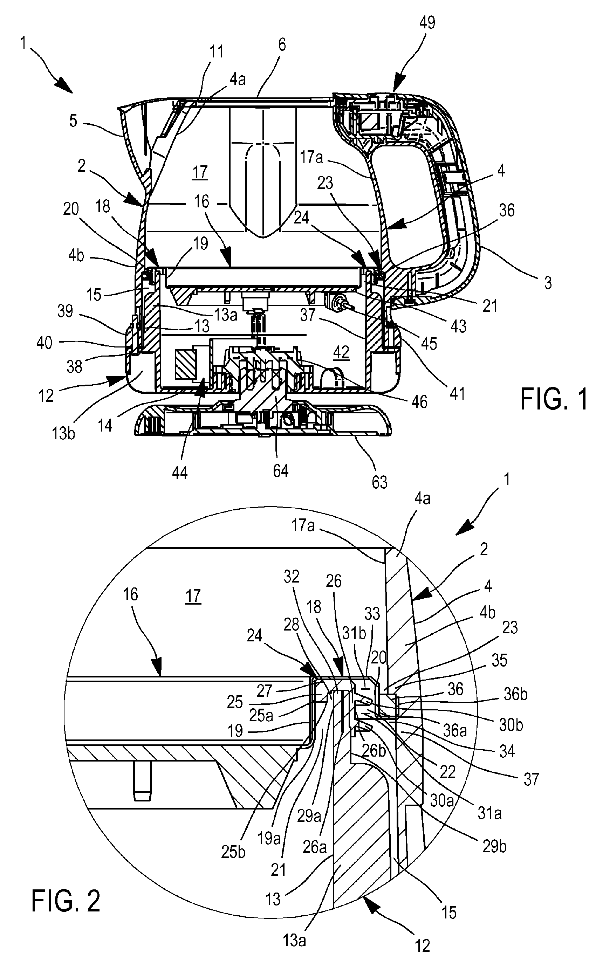

Tel qu'illustré sur les figures 1 à 3, la bouilloire 1 comprend un corps 2 en matière plastique qui assure une très faible conduction thermique afin d'éviter que l'utilisateur ne se brûle lorsqu'il manipule la bouilloire contenant de l'eau bouillante. Pour permettre la manipulation de la bouilloire 1, celle-ci comprend une poignée 3 fixée au corps 2. De préférence, le corps 2 et la poignée 3 sont réalisés en une seule pièce par moulage. Le corps 2 comprend une paroi externe 4 périphérique, de préférence de forme circulaire, qui s'étend vers le bas. La partie supérieure 4a de la paroi externe 4 comprend un bec verseur 5 permettant de verser l'eau bouillante lorsque le corps 2 est incliné. Cette partie supérieure 4a comprend une ouverture 6 qui reçoit un couvercle 7 de fermeture. Ce couvercle 7 comprend un système d'ouverture/fermeture 8 permettant l'encliquetage du couvercle sur la partie supérieure 4a du corps lors de sa mise en place au niveau de l'ouverture 6. Ce système d'ouverture/fermeture 8 comprend des ergots 9a, 9b escamotables lors de l'actionnement d'un bouton d'activation 10, ces ergots 9a, 9b venant se positionner sous le pourtour périphérique 11 de l'ouverture 6.

Tel qu'illustré sur les figures 1 et 2, la bouilloire 1 comprend un boîtier inférieur 12 également dans une matière plastique assurant une faible conduction thermique. Ce boîtier inférieur 12 comprend une paroi interne 13 périphérique et un fond 14. La paroi interne 13 s'étend vers le haut et comporte une partie supérieure 13a. La paroi interne 13 présente une forme similaire à la paroi externe 4 du corps 2, en l'occurrence une forme circulaire. Le diamètre de la paroi interne 13 est inférieur à celui de la partie inférieure 4b de la paroi externe 4, ce qui permet l'introduction de la partie supérieure 13a de la paroi interne 13 à l'intérieur de la partie inférieure 4b de la paroi externe 4, en conservant un espacement 15 sur toute la périphérie entre lesdites parois interne 13 et externe 4.

Tel qu'illustré sur les figures 1 et 2, la bouilloire 1 comprend également une plaque chauffante 16 qui dispose d'une très bonne conduction thermique et constitue le fond d'une chambre 17 permettant de contenir de l'eau afin de la faire bouillir. Le contour 17a de cette chambre 17 est constitué par la partie supérieure 4a de la paroi externe 4 du corps 2. La plaque chauffante 16 comprend un rebord 18 périphérique de forme semblable aux parois interne 13 et externe 4, en l'occurrence de forme circulaire. Ce rebord 18 comprend un bord interne 19 et un bord externe 20, de forme circulaire, qui sont tous les deux recourbés vers le bas en s'étendant sur une longueur permettant de recevoir la partie supérieure 13a de la paroi interne 13, entre lesdits bords interne 19 et externe 20, comme illustré en détail sur la figure 2. Le diamètre du bord interne 19 est dimensionné pour maintenir un second espacement 21 entre ledit bord interne 19 et la partie supérieure 13a de la paroi interne 13, comme illustré en figure 2. En outre, le diamètre et l'épaisseur du bord externe 20 sont dimensionnés pour maintenir, d'une part, un troisième espacement 22 entre la partie supérieure 13a de la paroi interne 13 et le bord externe 20 et, d'autre part, un quatrième espacement 23 entre le bord externe 20 et la partie inférieure 4b de la paroi externe 4, tel qu'illustré en figure 2.

Tel qu'illustré en figures 1 et 2, un joint d'étanchéité interne 24 est agencé entre le rebord 18 de la plaque chauffante 16 et la partie supérieure 13a de la paroi interne 13. Ce joint d'étanchéité interne 24 a une forme annulaire et comprend une branche interne 25, une branche externe 26 et une jonction 27 entre les branches interne 25 et externe 26. Le diamètre de la face interne 25a de la branche interne 25 est dimensionné pour permettre son montage serré autour de la face externe 19a du bord interne 19 du rebord 18, comme illustré en figure 2. En outre l'épaisseur de la branche interne 25 permet de maintenir un cinquième espacement 28 entre la face externe 25b de la branche interne 25 et la face interne 29a de la partie supérieure 13a de la paroi interne 13.

Tel qu'illustré en figures 1 et 2, le diamètre de la face interne 26a de la branche externe 26 est dimensionné pour permettre un montage serré de la branche externe 26 sur la face externe 29b de la partie supérieure 13a de la paroi interne 13. La face externe 26b de la branche externe 26 comprend des lèvres 30a, 30b jointives qui assurent un montage serré sur la face interne 20a du bord externe 20 du rebord 18. Cette face interne 20a du bord externe 20 comprend des stries 31 a, 31 b

Tel qu'illustré en figure 2, la face inférieure 27a de la jonction 27 est en appui sur l'extrémité supérieure 32 de la partie supérieure 13a de la paroi interne 13. De même, la face supérieure 27b de la jonction est en appui sur le fond 33 du rebord 18.

Ainsi, la partie de la face inférieure plaque chauffante 16 située au niveau du rebord 18 est maintenue emboîtée et assemblée, de manière étanche, sur la partie supérieure 13a de la paroi interne 13 du boîtier inférieur 12.

Tel qu'illustré sur la figure 2, le bord externe 20 du rebord 18 comprend à son extrémité inférieure un épaulement externe 34 qui s'étend radialement à la périphérie de la plaque chauffante 16. En outre, la partie inférieure 4b de la paroi externe 4 du corps 2 comprend un épaulement interne 35 agencé de sorte qu'il soit disposé au-dessus de cet épaulement externe 34. Par ailleurs, un joint d'étanchéité externe 36 présente la forme d'un tore et présente une face interne 36a dont le diamètre assure un montage serré autour de la face externe 20b du bord externe 20, comme illustré en figure 2. De même, ce joint d'étanchéité 36 comprend une face externe 36b dont le diamètre assure un montage serré de la face interne 37 de la partie inférieure 4b de la paroi externe 4, située en dessous de l'épaulement interne 35, comme illustré en figure 2. On remarque sur cette figure 2 que ce joint d'étanchéité externe 36 permet d'assurer une butée indirecte entre l'épaulement externe 34 du bord externe 20 et l'épaulement interne 35 de la paroi 4, ce qui assure un arrêt en position du corps 2 par rapport à la plaque chauffante 16, et donc un arrêt en position du corps par rapport au boîtier inférieur 12.

Tel qu'illustré en figure 1, un épaulement externe 38 périphérique est agencé entre la partie supérieure 13a et une partie inférieure 13b de la paroi interne 13 du boîtier inférieur 12. La distance qui sépare cet épaulement externe 38 de l'extrémité supérieure 32 de la paroi interne 13 et la distance qui sépare l'extrémité inférieure 39 de la paroi externe 4 du corps 2 et l'épaulement interne 35 sur ladite paroi externe 4, sont dimensionnées de sorte que lors de la mise en butée de cet épaulement interne 35 par rapport à l'épaulement externe 34 sur le rebord 18 de la plaque chauffante 16, par l'intermédiaire du joint d'étanchéité externe 36, un sixième espacement 40 soit préservé entre l'extrémité inférieure 39 du corps 2 et l'épaulement externe 38 du boîtier inférieur 12. Ce sixième espacement 40 est disposé dans la continuité du premier espacement 15 entre la paroi interne 13 et la paroi externe 4. Ainsi, en cas de défectuosité du joint d'étanchéité externe 36, l'eau s'évacue directement de la chambre 17 vers l'extérieur de la bouilloire 1 en passant par le premier espacement 15 puis par le sixième espacement 40.

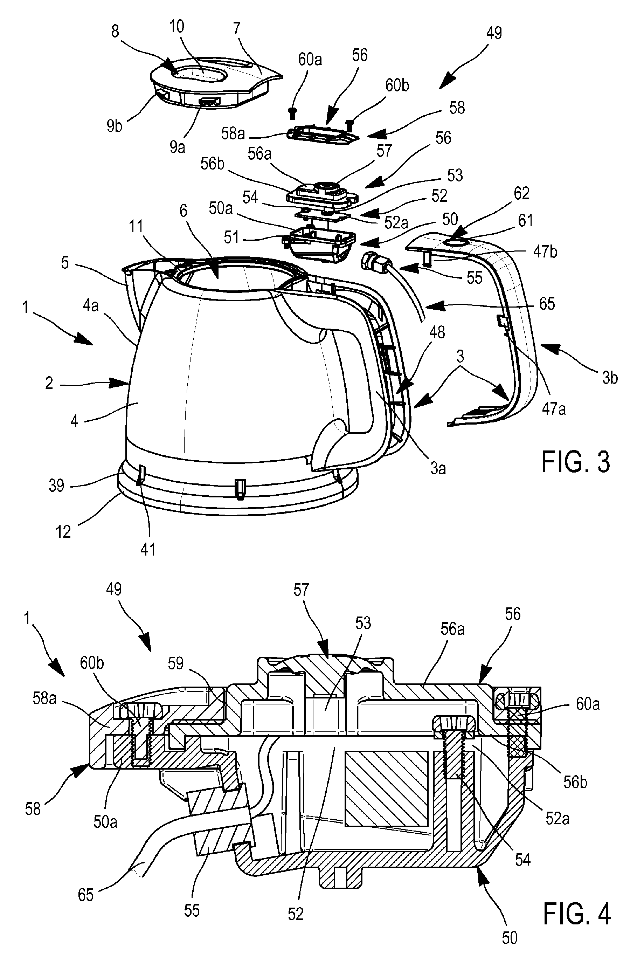

Tel qu'illustré en figures 1 et 3, l'extrémité inférieure 39 de la paroi externe 4 comprend des trous 41 uniformément répartis autour du corps 2, qui permettent le passage de vis de fixation (non illustrées). En outre la partie inférieure 13a de la paroi interne 13 comprend au niveau de l'épaulement externe 38 des taraudages (non illustrés) uniformément répartis autour du boîtier inférieur 12, en correspondance avec les trous 41. Ces taraudages permettent le vissage des vis de fixation pour le maintien assemblé du corps 2 sur le boîtier inférieur 12. Cette fixation assure également l'assemblage entre la plaque chauffante 16 et la partie supérieure 13a de la paroi interne 13 du boîtier inférieur 12 et entre la plaque chauffante 16 et la partie inférieure 4b de la paroi externe 4 du corps 2.

Tel qu'illustré en figure 1, lorsque le corps 2, le boîtier inférieur 12 et la plaque chauffante 16 sont assemblés entre eux, ledit boîtier inférieur 12 définit une chambre intérieure 42 qui permet notamment le logement d'une résistance chauffante 43 fixée sous la plaque chauffante 16, d'un dispositif électromécanique de commande interne 44 et d'un capteur de température 45. Le boîtier inférieur 12 comprend un connecteur électrique 46 femelle, agencé de manière étanche dans le fond 14 du boîtier inférieur 12. Ce connecteur électrique 46 est raccordé au dispositif électromécanique de commande interne 44 et permet sa connexion électrique à une base ou un socle 63 qui comprend un connecteur mâle 64 complémentaire au connecteur électrique 46 femelle. Cette base est configurée pour être raccordée électriquement à une source électrique externe par le biais d'une prise de courant. On remarque sur la figure 1 que le connecteur électrique 46 est circulaire, ce qui est également le cas du connecteur électrique sur la base. Cela permet une connexion du corps 2 sur la base d'alimentation électrique selon une quelconque orientation à 360°. Une telle base n'est pas illustrée mais est connue de l'homme du métier.

Tel qu'illustré en figures 3 et 4, la poignée 3 de la bouilloire 1 est constituée d'une première partie 3a intégrée complètement au corps 2, et d'une seconde partie 3b amovible. Pour cela, la seconde partie 3b comprend des pattes de fixation 47a, 47b qui s'encliquètent à l'intérieur de la première partie 3a de cette poignée 3. La première partie 3a de la poignée 3 comprend un évidement interne 48, illustré en figure 3, qui permet le logement et le passage d'un câble 65 (illustré sur les figures 3 et 4) pour son raccordement au boîtier inférieur 12. Pour cela, la paroi interne 13 comprend un trou de passage (non illustré) du câble 65 et un presse-étoupe est monté au niveau dudit trou de passage pour permettre l'introduction du câble 65 de manière étanche à l'intérieur de la chambre intérieure 42.

Tel qu'illustré en figures 3 et 4, un dispositif de commande externe 49 est agencé en partie supérieure de la poignée 3 et permet l'activation du dispositif électromécanique de commande interne 44. Ce dispositif de commande externe 49 comprend un support inférieur 50 qui est logé dans l'évidement interne 48 de la première partie 3a de la poignée 3 et fixé à l'intérieur de cet évidement 48 au moyen de vis de fixation 51 illustrées en figure 3. Le dispositif de commande externe 49 comprend également une carte circuit imprimé 52 qui intègre un interrupteur marche/arrêt 53 de type switch ON/OFF. Cette carte circuit imprimé 52 est fixée sur la face supérieure 50a du support inférieur 50 au moyen de vis de fixation 54, comme illustré en figure 4. L'extrémité supérieure du câble 65 passe au travers du support inférieur 50 et est raccordé à la carte circuit imprimé 52. Pour cela un trou de passage est prévu sur le support inférieur 50 et reçoit un presse-étoupe 55, illustré en figures 3 et 4, qui assure un passage étanche du câble 65 au travers du support inférieur 50. Tel qu'illustré en figures 3 et 4, le dispositif de commande externe 49 comprend un joint d'étanchéité 56 en matière élastomère qui comprend une partie centrale 56a muni d'un bouton souple 57, cette partie centrale 56a étant configurée pour recouvrir les composants sur la carte circuit imprimé 52 et l'interrupteur 53 en épousant leur forme. La souplesse du bouton souple 57 permet sa déformation lorsque l'utilisateur exerce une pression dessus et ainsi, l'activation de l'interrupteur 53. Le joint d'étanchéité 56 comprend également un contour périphérique 56b qui est plat et qui repose sur le contour 52a de la carte circuit imprimé 52. Le dispositif de commande externe 49 comprend également une pièce de serrage 58 qui comprend en sa partie centrale une ouverture 59 qui est configurée pour permettre le passage de la portion centrale 56a du joint d'étanchéité 56. Cette pièce de serrage 58 comprend un contour 58a périphérique et plat qui prend appui au-dessus du contour 56b du joint 56 et permet de serrer en sandwich ledit contour 56b du joint 56 élastomère entre le contour 52a de la carte circuit imprimé 52 et le contour 58a de la pièce de serrage 58. Le contour 52a de la carte circuit imprimé 52 repose sur la face supérieure 50a de la pièce de support 50, ce qui implique que le contour 56b du joint 56 est en appui indirectement sur ladite face supérieure 50a. On pourrait cependant prévoir un appui direct du contour 56b du joint 56, dans quel cas le joint serait pris en sandwich entre la pièce de support 50 et la pièce de serrage 58. La pièce de serrage 58 est fixée directement sur la pièce de support 50 au moyen de vis de fixation 60a, 60b. Tel qu'illustré en figure 4, la seconde partie 3b de la poignée 3 comprend une ouverture 61 qui permet le passage du bouton souple 57 et de l'interrupteur 53 lors de son assemblage avec la première partie 3a de la poignée. Le contour 62 de cette ouverture est en appui sur la partie centrale 56a du joint 56, autour du bouton souple 57, ce qui assure également une étanchéité entre le dispositif de commande externe 49 et la poignée 3.

D'autres caractéristiques sont envisageables dans le cadre de l'invention. On peut notamment prévoir un voyant lumineux sur la carte circuit imprimé et un joint 56 d'étanchéité dans un élastomère transparent, pour indiquer l'allumage de la bouilloire 1. On peut également prévoir des variantes de forme pour le joint d'étanchéité interne 24 et pour le joint d'étanchéité externe 36.

## Revendications

1. Bouilloire (1) comprenant un corps (2) en plastique, une plaque chauffante (16) et un boîtier inférieur (12) dans lequel est logé un dispositif de commande interne (44), dans laquelle :
- le boîtier inférieur (12) comprend une paroi interne (13) périphérique qui s'étend vers le haut ;
- le corps (2) comporte une partie inférieure (4b) ;
- la plaque chauffante comprend une face inférieure (19a, 20a, 33) et un rebord périphérique (18) ;
- un joint d'étanchéité externe (36) est agencé entre le rebord périphérique (18) et la partie inférieure (4b),
**caractérisée en ce que** un joint d'étanchéité interne (24) est agencé entre la paroi interne (13) et la face inférieure (19a, 20a, 33) de la plaque chauffante (16) pour empêcher toute pénétration d'eau dans le boitier, notamment de l'eau issue d'une fuite due à un défaut d'étanchéité du joint d'étanchéité externe (36) et **en ce que** la partie inférieure (4b) du corps comprend une paroi externe (4) périphérique configurée pour réceptionner au moins une partie supérieure (13a) de la paroi interne (13) tout en conservant un espacement (15, 40) entre ces deux parois interne (13) et externe (4), ledit espacement communiquant vers l'extérieur de la bouilloire.

2. Bouilloire (1) selon la revendication 1, **caractérisée en ce que** le rebord périphérique (18) de la plaque chauffante (16) est muni d'un bord externe (20) recourbé vers le bas et configuré pour être positionné entre la paroi interne (13) et la paroi externe (4) en maintenant un espacement (22, 23), d'une part, entre la paroi interne (13) et le bord externe (20) et, d'autre part, entre le bord externe (20) et la paroi externe (4).

3. Bouilloire (1) selon la revendication 2, **caractérisée en ce que** le rebord périphérique (18) est muni d'un bord interne (19) recourbé vers le bas et configuré pour permettre le logement de la partie supérieure (13a) de la paroi interne (13) entre le bord interne et le bord externe (20), le premier joint d'étanchéité interne (24) étant configuré pour assurer également une étanchéité entre le bord interne et la partie supérieure de la paroi interne.

4. Bouilloire (1) selon la revendication 3, **caractérisée en ce que** le joint d'étanchéité interne (24) comprend, dans un plan de vue en coupe sectionnelle :
- une branche interne (25) qui s'étend vers le bas et est configurée pour être montée serrée autour du bord interne (19),
- une branche externe (26) qui s'étend vers le bas et présente une face interne (26a) configurée pour être montée serrée autour de la partie supérieure (13a) de la paroi interne (13) et, une face externe (26b) configurée pour monter serré le bord externe (20) autour de ladite face externe,
- une jonction (27) entre la branche interne et la branche externe, une face inférieure (27a) de la jonction étant configurée pour prendre appui sur l'extrémité supérieure (32) de la partie supérieure de la paroi interne et une face supérieure (27b) de la jonction étant configurée pour prendre appui sur le fond (33) du rebord (18).

5. Bouilloire (1) selon la revendication 4, **caractérisée en ce que** la face externe (26b) de la branche externe (26) comprend au moins une lèvre (30a, 30b) et le bord externe (20) comprend une face interne (20a) munie de stries (31 a, 31 b).

6. Bouilloire (1) selon l'une des revendications 1 à 5, **caractérisée en ce que** le bord externe (20) du rebord périphérique (18) comprend à son extrémité inférieure un épaulement externe (34) et la paroi externe (4) comprend un épaulement interne (35), le joint d'étanchéité externe (36) étant positionné entre l'épaulement interne et l'épaulement externe.

7. Bouilloire (1) selon la revendication 6, **caractérisée en ce que** la paroi interne (13) du boîtier inférieur (12) comprend une partie inférieure (13b) et un épaulement externe (38) périphérique agencé entre la partie inférieure (13b) et la partie supérieure (13a) de ladite paroi interne, l'épaulement interne (35) de la paroi externe (4) et l'épaulement externe (34) du bord externe (20) étant configurés pour maintenir un espacement (40) entre l'extrémité inférieure (39) périphérique du corps (2) et l'épaulement externe (38) du boîtier inférieur (12), lors de leur assemblage.

8. Bouilloire (1) selon la revendication 7, **caractérisée en ce que** des moyens de fixation (41) sont agencés entre l'extrémité inférieure (39) du corps (2) et l'épaulement externe (38) entre les deux parties (13a, 13b) de la paroi interne (13) du boîtier inférieur (12).

9. Bouilloire (1) selon l'une des revendications 1 à 8, **caractérisée en ce que** le corps (2) comprend une poignée (3) et un dispositif de commande externe (49) est agencé sur la poignée, ledit dispositif de commande externe étant raccordé par un câble (65) au dispositif de commande interne (44) dans le boîtier inférieur (12), des moyens d'étanchéité étant agencés entre le câble (65) et ledit boîtier inférieur (12).

10. Bouilloire (1) selon la revendication 9, **caractérisée en ce que** les moyens d'étanchéité sont formés par un presse-étoupe agencé sur le boîtier inférieur (12).

11. Bouilloire (1) selon la revendication 9, **caractérisée en ce que** le dispositif de commande externe (49) forme un module autonome étanche.

12. Bouilloire (1) selon l'une des revendications 1 à 11, **caractérisée en ce qu'**elle comprend une base (63) d'alimentation électrique déportée, munie d'un connecteur mâle (64), le boîtier inférieur (12) comprenant un fond (14) muni d'un connecteur femelle (46) configuré pour recevoir le connecteur mâle, ledit connecteur femelle étant configuré pour assurer une étanchéité du boîtier inférieur.

## Patentansprüche

1. Wasserkocher (1) mit einem Körper (2) aus Kunststoff, einer Heizplatte (16) und einem unteren Gehäuse (12), in dem sich eine innere Steuervorrichtung (44) befindet, wobei:
- das untere Gehäuse (12) eine innere umlaufende Wand (13) umfasst, die sich nach oben erstreckt,
- der Körper (2) einen unteren Teil (4b) aufweist,
- die Heizplatte eine Unterseite (19a, 20a, 33) und einen umlaufenden Rand (18) umfasst,
- eine äußere Dichtung (36) zwischen dem umlaufenden Rand (18) und dem unteren Teil (4b) angeordnet ist, **dadurch gekennzeichnet, dass** sich zwischen der inneren Wand (13) und der Unterseite (19a, 20a, 33) der Heizplatte (16) eine innere Dichtung (24) befindet, um jegliches Eindringen von Wasser in das Gehäuse zu verhindern, insbesondere von Wasser, das aufgrund einer Undichtigkeit der äußeren Dichtung (36) aus einem Leck austritt, und dass der untere Teil (4b) des Körpers eine äußere umlaufende Wand (4) umfasst, die für die Aufnahme zumindest eines oberen Teils (13a) der inneren Wand (13) ausgelegt ist und dabei einen Zwischenraum (15, 40) zwischen dieser inneren (13) und dieser äußeren (4) Wand beibehält, wobei der genannte Zwischenraum mit der Außenseite des Wasserkochers in Verbindung steht.

2. Wasserkocher (1) nach Anspruch 1, **dadurch gekennzeichnet, dass** der umlaufende Rand (18) der Heizplatte (16) über einen äußeren, nach unten gekrümmten Rand (20) verfügt, der dafür ausgelegt ist, zwischen der inneren Wand (13) und der äußeren Wand (4) platziert zu werden und dabei einen Zwischenraum (22, 23) einerseits zwischen der inneren Wand (13) und dem äußeren Rand (20) und andererseits zwischen dem äußeren Rand (20) und der äußeren Wand (4) aufrechtzuerhalten.

3. Wasserkocher (1) nach Anspruch 2, **dadurch gekennzeichnet, dass** der umlaufende Rand (18) über einen inneren nach unten gekrümmten Rand (19) verfügt, der dafür ausgelegt ist, die Aufnahme des oberen Teils (13a) der inneren Wand (13) zwischen dem inneren Rand und dem äußeren Rand (20) zu gestatten, wobei die erste innere Dichtung (24) dafür ausgelegt ist, auch eine Dichtigkeit zwischen dem inneren Rand und dem oberen Teil der inneren Wand sicherzustellen.

4. Wasserkocher (1) nach Anspruch 3, **dadurch gekennzeichnet, dass** die innere Dichtung (24) in einer Querschnittansicht Folgendes umfasst:
- einen inneren Schenkel (25), der sich nach unten erstreckt und so ausgelegt ist, dass er um den inneren Rand (19) gepresst wird,
- einen äußeren Schenkel (26), der sich nach unten erstreckt und eine Innenseite (26a) aufweist, die so ausgelegt ist, dass sie um den oberen Teil (13a) der inneren Wand (13) gepresst wird, und der eine Außenseite (26b) aufweist, die so ausgelegt ist, dass der äußere Rand (20) um die genannte Außenseite gepresst wird,
- eine Verbindung (27) zwischen dem inneren und dem äußeren Schenkel, wobei die Unterseite (27a) der Verbindung so ausgelegt ist, dass sie sich auf dem oberen Ende (32) des oberen Teils der inneren Wand abstützt, und wobei die Oberseite (27b) der Verbindung so ausgelegt ist, dass sie sich auf dem Boden (33) des Randes (18) abstützt.

5. Wasserkocher (1) nach Anspruch 4, **dadurch gekennzeichnet, dass** die Außenseite (26b) des äußeren Schenkels (26) zumindest eine Lippe (30a, 30b) und der äußere Rand (20) eine mit Rippen (31 a, 31 b) versehene Innenseite (20a) umfasst.

6. Wasserkocher (1) nach einem der Ansprüche 1 bis 5, **dadurch gekennzeichnet, dass** der äußere Rand (20) des umlaufenden Rands (18) an seinem unteren Ende einen äußeren Absatz (34) und die äußere Wand (4) einen inneren Absatz (35) umfasst, wobei die äußere Dichtung (36) zwischen dem inneren Absatz und dem äußeren Absatz platziert wird.

7. Wasserkocher (1) nach Anspruch 6, **dadurch gekennzeichnet, dass** die innere Wand (13) des unteren Gehäuses (12) einen unteren Teil (13b) und einen äußeren umlaufenden Absatz (38) umfasst, der sich zwischen dem unteren Teil (13b) und dem oberen Teil (13a) der genannten inneren Wand befindet, wobei der innere Absatz (35) der äußeren Wand (4) und der äußere Absatz (34) des äußeren Rands (20) so ausgelegt sind, dass sie beim Zusammensetzen einen Zwischenraum (40) zwischen dem unteren umlaufenden Ende (39) des Körpers (2) und dem äußeren Absatz (38) des unteren Gehäuses (12) aufrechterhalten.

8. Wasserkocher (1) nach Anspruch 7, **dadurch gekennzeichnet, dass** zwischen dem unteren Ende (39) des Körpers (2) und dem äußeren Absatz (38) zwischen den beiden Teilen (13a, 13b) der inneren Wand (13) des unteren Gehäuses (12) Befestigungsmittel (41) angeordnet sind.

9. Wasserkocher (1) nach einem der Ansprüche 1 bis 8, **dadurch gekennzeichnet, dass** der Körper (2) einen Griff (3) umfasst und eine äußere Steuervorrichtung (49) an dem Griff angeordnet ist, wobei die genannte äußere Steuervorrichtung durch ein Kabel (65) mit der inneren Steuervorrichtung (44) im unteren Gehäuse (12) verbunden ist, wobei Dichtungsmittel zwischen dem Kabel (65) und dem genannten unteren Gehäuse (12) angeordnet sind.

10. Wasserkocher (1) nach Anspruch 9, **dadurch gekennzeichnet, dass** die Dichtungsmittel durch eine an dem unteren Gehäuse (12) befindliche Kabelverschraubung gebildet werden.

11. Wasserkocher (1) nach Anspruch 9, **dadurch gekennzeichnet, dass** die äußere Steuervorrichtung (49) ein dichtes eigenständiges Modul bildet.

12. Wasserkocher (1) nach einem der Ansprüche 1 bis 11, **dadurch gekennzeichnet, dass** er einen abgesetzten Sockel (63) zur Stromversorgung mit einem Stecker (64) umfasst, wobei das untere Gehäuse (12) einen Boden (14) mit einer Buchse (46) aufweist, die für die Aufnahme des Steckers ausgelegt ist, wobei die genannte Buchse so ausgelegt ist, dass sie die Dichtigkeit des unteren Gehäuses sicherstellt.

## Claims

1. Kettle (1) comprising a body (2) made of plastic, a heating plate (16) and a lower housing (12) in which an internal control device (44) is housed, in which:
- the lower housing (12) comprises an inner peripheral wall (13) that extends upwards;
- the body (2) comprises a lower section (4b);
- the heating plate includes a lower face (19a, 20a, 33) and a peripheral rim (18);
- an outer seal (36) is positioned between the peripheral rim (18) and the lower section (4b), **characterised in that** an inner seal (24) is positioned between the inner wall (13) and the lower face (19a, 20a, 33) of the heating plate (16) to prevent water from entering the housing, particularly water from a leak due to a sealing defect in the outer seal (36) and **in that** the lower section (4b) of the body includes an outer peripheral wall (4) configured to receive at least one upper section (13a) of the inner wall (13), while maintaining a space (15, 40) between these two inner (13) and outer walls (4), said space being connected to the exterior of the kettle.

2. Kettle (1) according to claim 1, **characterised in that** the peripheral rim (18) of the heating plate (16) has an outer edge (20) curved downwards and configured to be positioned between the inner wall (13) and the outer wall (4) while maintaining a space (22, 23), on the one hand, between the inner wall (13) and the outer edge (20) and, on the other, between the outer edge (20) and the outer wall (4).

3. Kettle (1) according to claim 2, **characterised in that** the peripheral rim (18) has an inner edge (19) curved downwards and configured to allow housing of the upper section (13a) of the inner wall (13) between the inner edge and the outer edge (20), the first inner seal (24) also being configured to provide a seal between the inner edge and the upper section of the inner wall.

4. Kettle (1) according to claim 3, **characterised in that** the inner seal (24) includes, in cross-sectional plan view:
- an inner leg (25) extending downwards and configured to be tightly fitted around the inner edge (19),
- an outer leg (26) extending downwards presenting an inner face (26a) configured to be tightly fitted around the upper section (13a) of the inner wall (13), and an outer face (26b) configured so that the outer edge (20) is tightly fitted around said outer face,
- a junction (27) between the inner leg and the outer leg, the lower face (27a) of the joint being configured to provide support for the upper end (32) of the upper section of the inner wall and an upper face (27b) of the joint being configured to provide support for the bottom (18) of the rim (33).

5. Kettle (1) according to claim 4, **characterised in that** the outer face (26b) of the outer leg (26) includes at least one lip (30a, 30b) and the outer edge (20) has an inner face (20a) with grooves (31 a, 31 b).

6. Kettle (1) according to claims 1 to 5, **characterised in that** the outer edge (20) of the peripheral edge (18) has, at its lower end, an outer shoulder (34) and the outer wall (4) has an inner shoulder (35), the outer seal (36) being positioned between the inner shoulder and the outer shoulder.

7. Kettle (1) according to claim 6, **characterised in that** the inner wall (13) of the lower housing (12) has a lower section (13b) and a peripheral outer shoulder (38) arranged between the lower section (13b) and the upper section (13a) of said inner wall, the inner shoulder (35) of the outer wall (4) and the outer shoulder (34) of the outer edge (20) being configured to maintain a space (40) between the lower peripheral end (39) of the body (2) and the outer shoulder (38) of the lower housing (12), used in their assembly.

8. Kettle (1) according to claim 7, **characterised in that** the means of attachment (41) are arranged between the lower end (39) of the body (2) and the outer shoulder (38) between the two sections (13a, 13b) of the inner wall (13) of the lower housing (12).

9. Kettle (1) according to any one of claims 1 to 8, **characterised in that** the body (2) has a handle (3) and an external control device (49) is arranged on the handle, such external control device being connected by a cable (65) to the internal control device (44) in the lower housing (12), with sealing means between the cable (65) and said lower housing (12).

10. Kettle (1) according to claim 9, **characterised in that** the sealing means are formed of a cable gland arranged on the lower housing (12).

11. Kettle (1) according to claim 9, **characterised in that** the external control device (49) forms a water-resistant, self-contained module.

12. Kettle (1) according to any one of claims 1 to 11, **characterised in that** it includes a remote power supply base (63), with a male connector (64), the lower housing (12) including a base (14) with a female connector (46) configured to receive the male connector, said female connector being configured to seal the lower housing.
